# EUROPEAN PATENT APPLICATION

(11) **EP 0 800 759 A1**
(43) Date of publication of application: **15.10.1997**
(21) Application number: 97105522.3
(22) Date of filing: 03.04.1997
(51) Int. Cl.: A01D 34/64

(54) **Front-cutting lawn mower**

(30) Priority: 12.04.1996 IT VI960058
(71) Applicant: Caron, Paolo, 38051 Borgo Valsugana (Trento) (IT)
(72) Inventor: Caron, Paolo, 38051 Borgo Valsugana (Trento) (IT)
(74) Representative: Forattini, Amelia

(57) **Abstract**

A front-cutting lawn mower includes: a chassis (2) which forms a longitudinal axis (L); at least one pair of lateral driving wheels (3, 3'); a front cutting head (5) provided with two counterrotating blades (9, 9'); a motor (14) which is operatively coupled to the driving wheels (3, 3') and to at least one (9') of the blades by virtue of appropriate transmission devices (15); a driver's seat (6) which is substantially superimposed on the driving wheels; a container (7) for collecting the cut grass which is fitted above the chassis; devices (11) for conveying the cut grass from the cutting head (5) to the collecting container (7). The transmission devices (15) include a reduction unit (16) arranged directly below the seat (6), with an input shaft (17) and output shafts (18, 18') which are lateral and substantially horizontal. The lateral output shafts (18, 18') are connected to the driving wheels (3, 3') by virtue of transmission devices of the belt or chain type in order to leave a central passage for the conveyance devices (11). Optimum distribution of weights and components is achieved.

## Description

The present invention relates to a front-cutting lawn mower of the professional or semiprofessional type, for both public and private use.

A conventional lawn mower of the above described type essentially includes a longitudinally-elongated chassis with at least one pair of driving wheels, a cutting head which is fitted at the front of the chassis and is provided with a pair of counterrotating blades, a motor which is operatively connected to the driving wheels and to at least one cutting blade through transmission devices, a driver's seat which is arranged above the driving wheels, and a container, for collecting the cut grass, fitted above the chassis to the rear of the seat.

Since the collecting container is arranged above the chassis, the cut grass must be transferred from the cutting head to the container in a forced manner, for example by means of forced conveyance devices.

In this conventional lawn mower, produced by the American company Walker Gsh, the internal-combustion engine is operatively coupled to the driving wheels by means of a double hydrostatic transmission which is essentially constituted by two hydraulic motors which act independently on either wheel by virtue of oil-bath gear-based reduction units. The capacity of each individual hydraulic motor is controlled by a lever arranged in front of the driver's seat so as to allow to adjust the speed and direction of rotation of the respective driving wheel.

By virtue of this kind of transmission, the machine can have a minimal turning radius and even a zero turning radius by turning about its own vertical axis, allowing excellent maneuverability and direction changes with angles of less than 90°.

Another advantage of this conventional machine is that its grass container is mounted on the chassis so that it can be tipped over, so that the user can comfortably unload it while remaining seated in the driver's seat.

However, the use of the dual hydrostatic transmission makes this machine economically disadvantageous, both owing to its initial cost and owing to the difficulty and troublesome nature of its maintenance.

The steering system with driving wheels having differential speeds and with separate control levers, similar to the one used in industrial-type earth-moving machines, requires considerable expertise, which is beyond the possibilities of ordinary users, and therefore this system is often rejected by private users.

Finally, the complexity and bulk of the hydrostatic transmission make the access to the various components of the machine difficult, reducing its overall reliability.

In another known type of mower, the motor and its transmission are arranged above the chassis and the grass container is accommodated in the lower part of the chassis, so as to facilitate its filling; accordingly, the operator must stop the machine, leave the driver's seat, and remove the container from its receptacle.

Another type of machine has grass conveyance devices of the conveyor-belt type, which are extremely complicated and delicate for this kind of use.

An aim of the invention is to overcome the above drawbacks by providing a machine of the type defined in the introduction which is structurally simple and mechanically reliable.

Another object of the invention is to provide a lawn mower which uses commonly commercially available components and requires a low level of maintenance.

Another object is to provide a lawn mower which has an optimum distribution of the various components, so as to facilitate their accessibility.

Another object is to provide a lawn mower which is extremely maneuverable and safe and can be easily steered even by non professional users with limited skill.

This aim, these objects, and others which will become apparent hereinafter are achieved by a front-cutting lawn mower, of the type defined in the introduction, characterized in that the transmission devices include a reduction unit which is arranged directly below the seat, with an input shaft and output shafts which are lateral and substantially horizontal, the lateral output shafts being connected to the pair of driving wheels by virtue of transmission devices of the belt or chain type in order to leave a central passage for the conveyance device.

This arrangement allows to simplify the structure and to make it more reliable than conventional machines of the past.

Further characteristics and advantages will become apparent from the detailed description of a preferred but not exclusive embodiment of the lawn mower according to the invention, given by way of non-limitative example with the aid of the accompanying drawings, wherein:

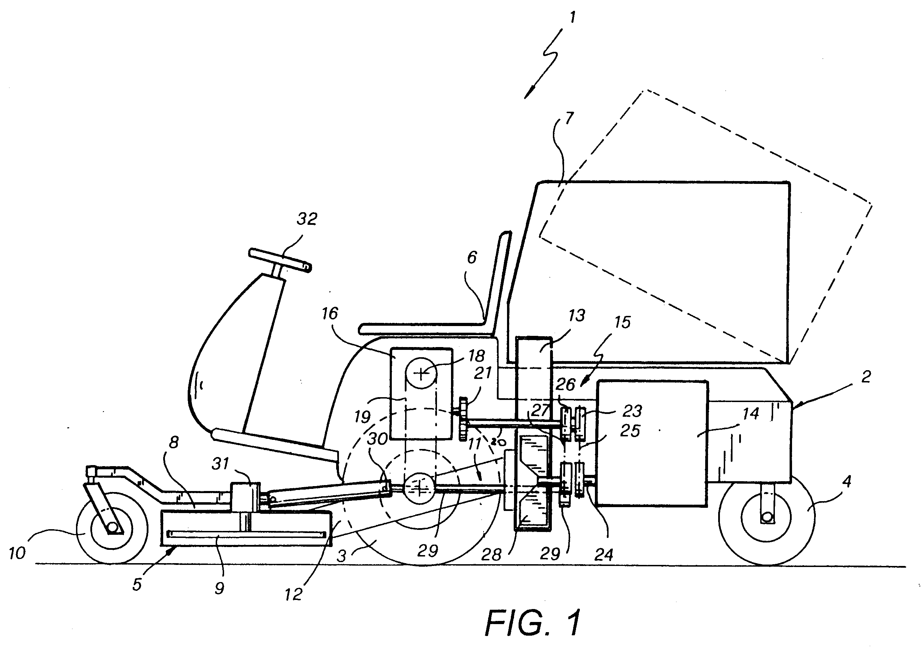

Figure 1 is a schematic lateral elevation view of the lawn mower according to the invention;

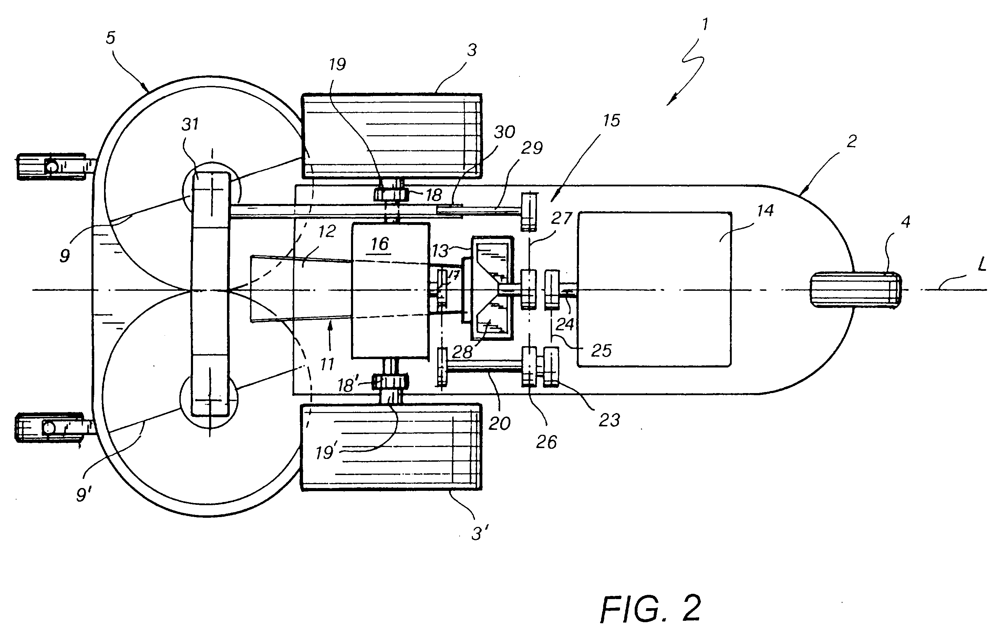

Figure 2 is a schematic and partially sectional plan view of the machine of Figure 1;

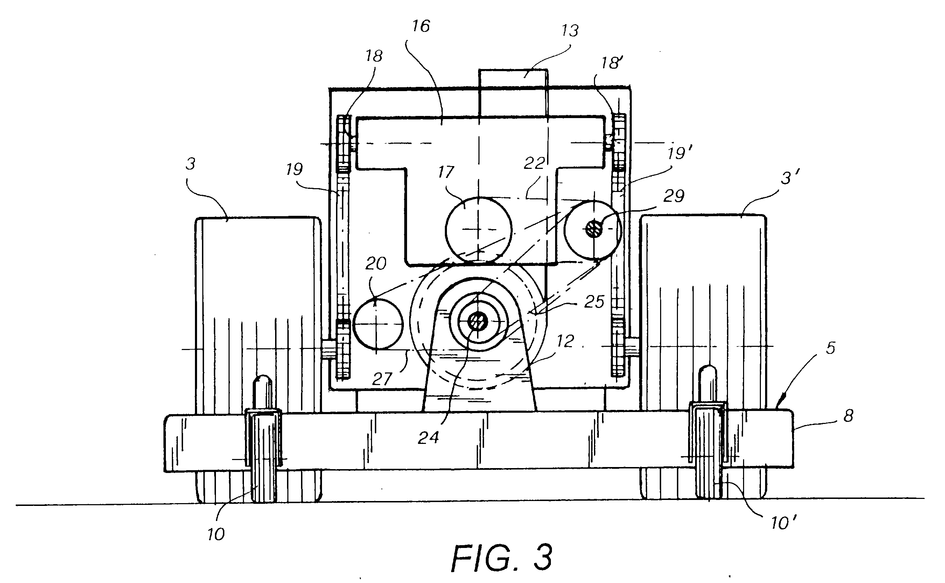

Figure 3 is a schematic and partially sectional front view of the machine of Figure 1.

With reference to the above figures, the lawn mower according to the invention, generally designated by the reference numeral 1, essentially includes a chassis or body 2 which forms a longitudinal axis L, with two lateral driving wheels 3, 3' which are symmetrical with respect to L and a central rear wheel 4, a front cutting head 5, a driver's seat 6, and a container 7 for collecting cut grass.

The chassis 2 can be of the kind with a box-like supporting structure made of welded or pressed metal plate, with an upper cover which can be turned over or moved and is made of metallic or synthetic material.

The cutting head 5 is of a per se known type and is composed of a protective housing 8 which internally accommodates a pair of adjacent blades 9, 9' which revolve about substantially vertical axes in opposite directions at a variable height from the ground in order to adjust the cutting height. The housing 8 is hinged to the front edge of the chassis 2 and is supported at the front by two castors 10, 10'.

The container 7 has holes and is pivoted, with its rear part, to the cover of the chassis 2 in order to be turned over and comfortably unloaded by a user sitting on the seat 6.

The seat 6 is anchored to the movable cover of the chassis 2 in a position which is substantially aligned with the driving wheels 3, 3', so as to increase the stability and maneuverability of the machine.

Devices are provided for conveying the cut grass and including a central duct 11 which connects the housing 8 to the container 7. In particular, the duct 11 includes a front portion 12, which is substantially horizontal or slightly inclined and is connected to the cutting head, and a substantially vertical rear portion 13, in which it is possible to engage a lower union of the container 7.

A motor 14 is accommodated inside the box-like structure of the chassis 2 and is operatively coupled to the driving wheels 3, 3' and to the blades 9, 9' of the cutting head 5 by virtue of transmission devices generally designated by the reference numeral 15.

According to the invention, the transmission devices 15 include a reduction unit 16 of the mechanical or hydraulic type which is arranged directly below the seat 6, above the driving wheels 3, 3'.

The reduction unit 16 has an input or power take-off shaft 17 which is substantially longitudinal and central and two transverse lateral output shafts 18, 18' which are preferably coupled by a differential and are coupled to the driving wheels 3, 3' by virtue of respective transmission devices 19, 19' of the belt or chain type.

Accordingly, below the reduction unit 16 and between the transmission devices 19, 19' there remains a space or passage for easily accommodating the conveyance duct 11.

The input shaft 17 of the reduction unit 16 is connected to the motor 14 by a longitudinal transmission shaft 20 which is substantially horizontal and is supported along a side wall of the chassis 2.

In particular, the shaft 20 is connected, through a front gear 21, to the input shaft 17 of the reduction unit 16 by means of a respective belt or chain transmission device 22 and, by means of a rear gear 23, to the driving shaft 24 by means of a respective transmission device 25 of the belt or chain type.

A centrifugal impeller 28 is coupled to an idler gear 26 by means of a transmission device 27 of the belt or chain type and is accommodated in a cylindrical chamber which connects the inclined portion 12 to the vertical portion 13 of the conveyance duct 11.

Optionally, the transmission device 27 is connected to a transmission shaft 29 with a universal joint 30 which is supported along the inner side of the chassis 2 which is opposite to the side of the shaft 20 and has a front end which is connected, by means of a bevel gear pair, to one of the rotating blades 9' of the cutting head 5. The other rotating blade 9 can be connected to the adjacent one by means of transmission devices 31 of any kind.

The steering system is of the steered-wheel type and in particular is constituted by the rear wheel 4, which pivots about a vertical axis V and is connected to a steering wheel 32 arranged in front of the driver's seat 6.

From the above description it is evident that the lawn mower according to the invention achieves the intended aim and objects and particularly achieves a simple and orderly arrangement of the transmission devices which distributes masses in an optimum manner and allows easy access to the various components.

Complicated motion transmission systems are also avoided, reducing assembly and running costs.

The invention also achieves high maneuverability and simplification in use and steering for users, requiring no professionalism and specialization.

The machine according to the invention is susceptible of numerous modifications and variations, which are within the scope of the inventive concept expressed in the accompanying claims and all of which are understood to be equally protected. All the details may be replaced with other technically equivalent items; the materials and the dimensions may be any according to the requirements.

## Claims

1. Front-cutting lawn mower, comprising: a chassis (2) which forms a longitudinal axis (L); at least one pair of lateral driving wheels (3, 3'); a front cutting head (5) provided with two counterrotating blades (9, 9'); a motor (14) which is operatively coupled to said pair of driving wheels (3, 3') and to at least one (9') of said blades by virtue of appropriate transmission devices (15); a driver's seat (6) which is substantially superimposed on said driving wheels; a container (7) for collecting the cut grass which is fitted above the chassis; devices (11) for conveying the cut grass from the cutting head (5) to the collecting container (7); characterized in that said transmission devices (15) comprise a reduction unit (16) arranged directly below said seat (6), with an input shaft (17) and output shafts (18, 18') which are lateral and substantially horizontal, said lateral output shafts (18, 18') being connected to said pair of driving wheels (3, 3') by virtue of transmission devices of the belt or chain type in order to leave a central passage for said conveyance devices (11).

2. Lawn mower according to claim 1, wherein said conveyance devices (11) consist of a central tubular duct which is substantially L-shaped, with a substantially horizontal front arm (12) connected to said cutting head (5) and a substantially vertical arm (13) which can be connected to said collecting container (7).

3. Lawn mower according to claim 1, wherein the input shaft (17) of said reduction unit (16) is substantially central and is connected to the motor through a substantially horizontal main transmission shaft (20).

4. Lawn mower according to claim 3, wherein said main transmission shaft (20) is rotatably supported along an inner side wall of said chassis.

5. Lawn mower according to claim 4, wherein said main shaft (20) has two end gears (21, 23) which are coupled respectively to said motor (14) and to said reduction unit (16) through respective transmission devices of the chain or belt type.

6. Lawn mower according to claim 4, wherein said main shaft (20) is connected by means of transmission devices, such as a belt or chain, to a cardan transmission shaft (29, 30) which is operatively coupled to at least one blade (9') of said cutting head (5).

7. Lawn mower according to claim 6, wherein said cardan shaft (29, 30) is rotatably supported along the inner side wall of said chassis which lies opposite to the side wall of the main transmission shaft (20).

8. Lawn mower according to claim 7, wherein said main transmission shaft (20) is furthermore operatively coupled to a centrifugal impeller (28) which is inserted in the connecting region of the branches (12, 13) of said conveyance duct (11) in order to produce the forced conveyance of the cut grass.

9. Lawn mower according to claim 1, wherein the steering system of the machine is of the type with a rear steered wheel (4) which is coupled to a steering wheel (32) arranged in front of the seat.
